# EUROPÄISCHE PATENTSCHRIFT

(11) **EP 1 880 028 B1**
(45) Veröffentlichungstag und Bekanntmachung des Hinweises auf die Patenterteilung: **12.02.2014**
(21) Anmeldenummer: 06724542.3
(22) Anmeldetag: 25.04.2006
(51) Int. Cl.: C22B 1/00, C22B 7/00, F27B 19/04, F27D 13/00

(54) **VERFAHREN ZUR RÜCKGEWINNUNG VON METALLEN AUS ABFÄLLEN UND ANDEREN MATERIALIEN MIT ORGANISCHEN BESTANDTEILEN**
METHOD FOR RECOVERING METALS FROM WASTE AND OTHER MATERIALS COMPRISING ORGANIC COMPONENTS
PROCEDE POUR RECYCLER DES METAUX PROVENANT DE DECHETS ET D'AUTRES MATERIAUX COMPORTANT DES CONSTITUANTS ORGANIQUES

(30) Priorität: 06.05.2005 DE 102005021656
(43) Veröffentlichungstag der Anmeldung: 23.01.2008
(73) Patentinhaber: Bayer Industry Services GmbH & Co. OHG, 51368 Leverkusen (DE)
(72) Erfinder: BEYER, Joachim, 51515 Kürten (DE); LEIDINGER, Walter, 40597 Düsseldorf (DE); CALAMINUS, Wolfgang, 47800 Krefeld (DE); VICKUS, Egidius, 51371 Leverkusen (DE); KUCKELSBERG, Wilhelm, 51373 Leverkusen (DE); MÄTSCHKE, Mark, 51515 Kürten (DE)
(74) Vertreter: Lütjens, Henning
(86) Internationale Anmeldenummer: PCT/EP2006/003770
(87) Internationale Veröffentlichungsnummer: WO 2006/119861

(56) Entgegenhaltungen:
- EP-A- 0 523 858
- WO-A-2005/084839
- DE-A1- 3 612 892
- US-A- 3 817 697
- US-A- 4 415 360
- US-A- 5 013 533
- US-A1- 2005 077 658
- HOLLMANN A.: "Edelmetall-Recycling: Verschwelung statt Verbrennung" WLB WASSER, LUFT UND BODEN, Nr. 3, 2000, Seiten 45-47, XP009071079 in der Anmeldung erwähnt
- PANKRATZ, E.: "Aufarbeitung von verbrauchten Ni-Fettkatalysatoren", FAT SCI. TECHNOL., vol. 95, July 1993 (1993-07), pages 487-490, XP002480576,
- PANKRATZ, E.: "Umweltschonende Aufarbeitung von Ni-haltigen Katalysatoren", FAT SCI. TECHNOL., vol. 97, June 1995 (1995-06), pages 508-512, XP009108884,

## Beschreibung

Die Erfindung betrifft ein Verfahren zur Rückgewinnung von Metallen, insbesondere Edelmetallen aus Abfällen und/oder Materialien, wobei den Abfällen und/oder Materialien in einem bevorzugt kontinuierlichen Prozess durch thermische Behandlung in einer Prozesskammer die organischen Komponenten entzogen und oxidiert werden, sowie eine Anlage zur Durchführung des Verfahrens.

Im Stand der Technik sind Verfahren zur mechanischen Trennung der Komponenten bekannt, bei denen maximal bis zu 90 % der enthaltenen Wertmetalle zurückgewonnen werden können. Zusätzlich zur mechanischen Trennung ist eine Entsorgung der schadstoffbelasteten verbleibenden organischen Bestandteile notwendig.

Aus DE A 9420410, DE A 9320018 und DE A 3518725 C2 ist ein Verfahren zur thermischen Behandlung von Elektronikschrotten durch Pyrolyse bekannt. Bei diesen Verfahren wird der im Rückstand verbleibende Pyrolysekoks im Rahmen einer weiteren Aufbereitung entfernt. In diesem Pyrolysekoks ist zum Teil mit hohen Konzentrationen an Dioxinen und Furanen zu rechnen. DE A 9420410, DE A 9320018 und DE A 3518725 C2 befassen sich mit einem Verfahren zum thermischen Recycling von mit organischen Stoffen vermischten bzw. beschichteten oder ähnlich verunreinigten metallischen Gegenständen, wie zum Beispiel Farb- oder Öldosen bzw. -kanister, - fässer oder anderen Gebinden. Diese als Schrott zu bezeichnenden Ausgangskomponenten werden in eine Schwelkammer eingebracht, in der sie im Wesentlichen ohne Sauerstoffzufuhr zunächst thermisch behandelt werden. Diese Schwelkammer wird während der Schwelphase mit einer Temperatur im Bereich von ca. 250 bis 500°C, von außen beheizt betrieben und besitzt eine sich drehende Trommel, die während des Verfahrens mit einer Drehgeschwindigkeit von 1 bis 2 Umdrehung pro Minute betrieben wird. Während der Schwelphase entstehen brennbare Pyrolysegase oder brennbare Pyrolyseöle, die dazu verwendet werden können, die Schwelkammer auf Temperatur zu bringen. Dem Schwelprozess wird ein Oxidationsprozess nachgeschaltet, in welchem in derselben Kammer jedoch zeitlich nachfolgend durch Einbringen von Sauerstoff die während des Schwelprozesses erzeugten Pyrolysegase verbrannt werden. Letzteres kann auch in einer der Schwelkammer nachgeschalteten Nachbrennkammer erfolgen. Diese Schrift befasst sich auch mit dem Recyceln von Edelmetallstaub enthaltendem Kehricht wie er unter anderem in der Schmuckindustrie entstehen kann.

Das Schwel-/Oxidationsverfahren wird in einer Veröffentlichung WLB Wasser, Luft und Boden 3/2000, auf der Seite 46 "Edelmetall-Recycling: Verschwelung statt Verbrennung" detailreicher beschrieben.

Alle diese Verfahren haben den Nachteil, dass mehr als 10 % des Metalls aus dem Schrott nicht wieder verwertbar ist und es sich um nacheinander ablaufende Prozesse handelt.

Der Erfindung liegt daher die Aufgabe zugrunde, ein einfaches Verfahren bereitzustellen, mit dem aus metallhaltigen Ausgangsstoffen, insbesondere Elektronikschrott, ein Sekundärrohstoff in hohen Ausbeuten (>90 %) erreicht wird.

Gelöst wird die Aufgabe durch die in den Ansprüchen angegebene Erfindung, wobei jeder Anspruch eine eigenständige Lösung der oben genannten Aufgabe ist und jeder Anspruch mit jedem anderen Anspruch kombinierbar ist.

Gegenstand der Erfindung ist ein Verfahren zur Rückgewinnung von Metallen aus metallhaltigen Abfällen und Materialien, dadurch gekennzeichnet, dass der metallhaltige Abfall vorzugsweise kontinuierlich in eine Prozesskammer eingeführt wird, unter kontinuierlicher intensiver Durchmischung thermisch behandelt wird, die organischen Komponenten kontinuierlich entzogen und anschließend oxidiert werden und die metallhaltigen Komponenten, bevorzugt als Metallkonglomerate und die weiteren anorganischen nichtmetallhaltigen Komponenten, im Wesentlichen kontinuierlich aus der Prozesskammer ausgetragen werden.

Metallhaltige Abfälle und Materialien im Sinne der Erfindung sind üblicherweise Mischungen von Metallen inkl. Edelmetallen und organischen bzw. anorganischen Stoffen. Geeignet ist das Verfahren beispielsweise für Elektronikschrott und dient insbesondere der Vorbereitung für die Rückgewinnung von Metallen wie z.B. Kupfer, Zink, Zinn, Blei und insbesondere der Vorbereitung für die Rückgewinnung von Edelmetallen wie z.B. Gold, Silber, Platin und Palladium. Beispiele für zu behandelndes Material sind mit elektronischen Bauteilen bestückte Platinen oder Geräteteile oder komplette elektronische Geräte. Organische Bestandteile sind z. B. Kunststoffe, inkl. schwer entflammbares und/oder Brom-, Chlor-, oder andere Halogene enthaltendes Material eventuell mit nicht-metallischen Bestandteilen wie Glasfasern gemischt. Diese Abfälle werden bevorzugt in vorzerkleinerter Form in die Prozesskammer beschickt.

Anders als beim eingangs genannten Stand der Technik erfolgt der Prozess nicht in zeitlich hintereinander abfolgenden, gegebenenfalls durch Wartepausen voneinander getrennten Prozessschritten im Chargenbetrieb in einer vor dem Prozess zu beschickenden und nach dem Prozess wieder zu entleerenden Prozesskammer, sondern im Durchlaufverfahren. Der metallhaltige Abfall wird kontinuierlich dem Prozess zugeführt und in der Prozesskammer intensiv durchmischt.

US-A-3 817 697 offenbart ein reduktives Verfahren (Pyrolyse) zur Entölung von Metallspänen bei dem zur Temperaturkontrolle kein Kühlmittel in die Prozesskammer dazugegeben wird.

US-A-4 415 360 beschreibt ein reduktives Verfahren zur Rückgewinnung von Metallen aus Abfällen wie Elektronikschrott durch thermische Behandlung in einem Kaldo-Verbrenner, wobei optional auch Sauerstoff in substöchiometrischen Verhältnissen und/oder Öl zugeführt werden kann (S. 5 Zeile 35 bis 49).

US2005/0077658A1 betrifft ein System zur Behandlung von Dämpfen aus Metallrückgewinnungsöfen. US2005/0077658A1 bezieht sich nicht auf den Einsatz von thermischen Verfahren auf metallhaltige Abfälle selber, sondern beschreibt erst die Behandlung von Dämpfen die aus der thermischen Behandlung der metallhaltigen Abfälle entstanden sind.

Pankratz, E.: "Aufarbeitung von verbrauchten Ni-Fettkatalysatoren" FAT SCI. TECHNOL., Bd. 95, Juli 1993 (1993-07), Seiten 487-490 und Pankratz, E.: "Umweltschonende Aufarbeitung von Ni-haltigen Katalysatoren" FAT SCI. TECHNOL., Bd. 97, Juni 1995 (1995-06), Seiten 508-512) betreffen ein Verfahren zur Rückgewinnung von Ni-haltigen Abfällen (Fettkatalysatoren) durch oxidative Verbrennung in einem Drehrohrofen.

US-A-5 013 533 betrifft ein Verfahren zur Rückgewinnung von Metallen aus verbrauchten Katalysatoren. Auch in diesem Verfahren wird ein Drehrohrofen (22) eingesetzt in den Luft (18) eingeströmt werden kann. Die oxidative Verbrennung findet bei Temperaturen von 177°C bis 870°C statt. Alle diese Verfahren haben den Nachteil, dass mehr als 10 % des Metalls aus dem Schrott nicht wieder verwertbar ist und es sich um nacheinander ablaufende Prozesse handelt.

Der Erfindung liegt daher die Aufgabe zugrunde, ein einfaches Verfahren bereitzustellen, mit dem aus metallhaltigen Ausgangsstoffen, insbesondere Elektronikschrott, ein Sekundärrohstoff in hohen Ausbeuten (>90 %) erreicht wird.

Gelöst wird die Aufgabe durch die in den Ansprüchen angegebene Erfindung, wobei jeder Anspruch eine eigenständige Lösung der oben genannten Aufgabe ist und jeder Anspruch mit jedem anderen Anspruch kombinierbar ist.

Gegenstand der Erfindung ist ein Verfahren zur Rückgewinnung von Metallen aus metallhaltigen Abfällen und Materialien bei dem der metallhaltige Abfall vorzugsweise kontinuierlich in eine Prozesskammer eingeführt wird, unter kontinuierlicher intensiver Durchmischung thermisch behandelt wird und unter Zuleitung von sauerstoffhaltigen Gasen behandelt wird die flüchtig restlichen, organischen Komponenten kontinuierlich entzogen und anschließend oxidiert werden und die metallhaltigen Komponenten, bevorzugt als Metallkonglomerate und die weiteren anorganischen nichtmetallhaltigen Komponenten, im Wesentlichen kontinuierlich aus der Prozesskammer ausgetragen werden, dadurch gekennzeichnet, dass die Verbrennungstemperatur in der Prozesskammer mittels Temperaturerfassungsmittel, Temperaturregelungsmitteln und einer Temperatursteuerung mittels Zugabe von Kühlmittel in die Prozesskammer, in einem Bereich von 400 bis 1100°C gehalten wird.

Metallhaltige Abfälle und Materialien im Sinne der Erfindung sind üblicherweise Mischungen von Metallen inkl. Edelmetallen und organischen bzw. anorganischen Stoffen. Geeignet ist das Verfahren beispielsweise für Elektronikschrott und dient insbesondere der Vorbereitung für die Rückgewinnung von Metallen wie z.B. Kupfer, Zink, Zinn, Blei und insbesondere der Vorbereitung für die Rückgewinnung von Edelmetallen wie z.B. Gold, Silber, Platin und Palladium. Beispiele für zu behandelndes Material sind mit elektronischen Bauteilen bestückte Platinen oder Geräteteile oder komplette elektronische Geräte. Organische Bestandteile sind z. B. Kunststoffe, inkl. schwer entflammbares und/oder Brom-, Chlor-, oder andere Halogene enthaltendes Material eventuell mit nicht-metallischen Bestandteilen wie Glasfasern gemischt. Diese Abfälle werden bevorzugt in vorzerkleinerter Form in die Prozesskammer beschickt.

Anders als beim eingangs genannten Stand der Technik erfolgt der Prozess nicht in zeitlich hintereinander abfolgenden, gegebenenfalls durch Wartepausen voneinander getrennten Prozessschritten im Chargenbetrieb in einer vor dem Prozess zu beschickenden und nach dem Prozess wieder zu entleerenden Prozesskammer, sondern im Durchlaufverfahren. Der metallhaltige Abfall wird kontinuierlich dem Prozess zugeführt und in der Prozesskammer intensiv durchmischt.

Intensive Durchmischung im Sinne der Erfindung bedeutet, dass der Abfall mittels eines Drehrohrs, einer Rostfeuerung oder in einem Wirbelschichtverfahren ständig in Bewegung gehalten wird oder in die Prozesskammer fein verteilt eingebracht wird.

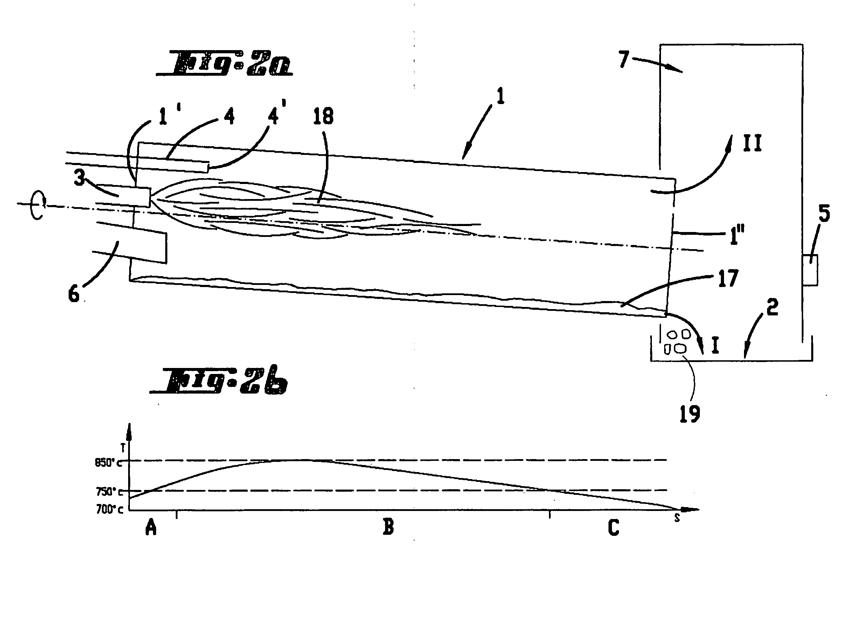

Mit thermischer Behandlung ist gemeint, dass in der Prozesskammer Temperaturen von 400 bis 1100°C, bevorzugt 600 bis 900°C, in einer weiteren bevorzugten Ausführungsform 500 bis 900°C, besonders bevorzugt 700 bis 850°C (Fig. 2b, Phase B), gehalten werden.

Um den Prozess zu unterstützen, können der Prozesskammer Gase, z.B.sauerstoffhaltige Gase, gezielt zugeleitet werden.

Die Prozesskammer wird bevorzugt von einem Drehrohrofen ausgebildet, der im Wesentlichen aus einem langgestreckten Drehrohr besteht, welches einseitig eine Beschickungsöffnung ausbildet. Zufolge der Drehung des Drehrohres und der Neigung desselben wird der beschickungsseitig in das Drehrohr gegebene Schrott auf dem Boden des Rohres intensiv durchmischt und weitertransportiert. Das in der Prozesskammer insbesondere im Drehrohr liegende Material wird in einer sich der Aufheizzone A anschließenden Verbrennungszone B innerhalb eines vorgegebenen Temperaturbereiches thermisch behandelt (Fig. 2b). Beschickungsseitig kann auch eine Stützfeuerung vorgesehen sein, um die thermischen Prozesse einzuleiten bzw. zu unterstützen.

Vorzugsweise wird die Aufwärmung des Schrotts auf 700 bis 850°C durch eine Stützfeuerung (3), die sich auf der Beschickungsseite (1') des Drehrohrofens (1) befindet, eingeleitet.

Die Prozesstemperatur wird mit geeigneten Temperaturerfassungsmitteln (wie z.B. Thermo-element, Infrarotkamera), Temperaturregelungsmitteln (wie z.B. elektronischer Bildauswertung von Infrarotkameradaten) und Temperatursteuerungsmitteln (wie z.B. Zugabe von Kühlmitteln in die Prozesskammer) in einem geeigneten Bereich gehalten.

Vorzugsweise ist die Infrarotkamera (5) der Austrittsseite (1") und insbesondere einer vom Ende des Drehrohrs beabstandeten Wandung einer Nachbrennkammer (7) zugeordnet.

Bei solchen Temperaturen entweichen die organischen Komponenten in der Verbrennungszone; das nicht flüchtige Verbrennungsprodukt bleibt auf dem Boden der Prozesskammer bzw. des Drehrohres und wird der Austrittsseite zugeführt, wo es als Rückstand austritt, der im Wesentlichen nur noch Metallbestandteile und anorganische Nichtmetallbestandteile enthält, die einer anschließenden Verarbeitung (z. B. Verhüttung) zugeführt werden.

In einer bevorzugten Ausführungsform wird der metallhaltige Abfall von der Beschickungsseite (1') zur Austrittsseite (1") transportiert, wobei der Abfall. zunächst in einer Aufheizzone (A) gegebenenfalls mit Hilfe eines Stützfeuers (3) aufgeheizt wird, dann in einer sich daran anschließenden Verbrennungszone (B) die organischen Komponenten von den metallischen Komponenten thermisch getrennt und zumindest teilweise bevorzugt größtenteils verbrannt werden und schließlich die nicht flüchtigen Metallbestandteile zusammen mit gegebenenfalls vorhandenen nicht flüchtigen anorganischen Bestandteilen auf der der Beschickungsseite der Prozesskammer gegenüberliegenden Austrittsseite im Wesentlichen kontinuierlich austreten.

Die thermisch abgetrennten organischen Komponenten werden als Rauchgas (II) abtransportiert, wobei eine nicht unerhebliche Menge der organischen Bestandteile innerhalb der Verbrennungszone oxidiert wird. Auch diese Verbrennungsprodukte sind im Rauchgas (II) enthalten. Innerhalb des Rauchgases (II) können sich darüber hinaus Metalldämpfe und sich gegebenenfalls in der Prozesskammer gebildete Metallverbindungen befinden. Die Prozessführung innerhalb der Prozesskammer ist vorzugsweise so gewählt (s. o.), dass der Anteil des Metalls, das als Gas- oder als Partikel in die Rauchgasreinigung gelangt, bei den zu verwertenden Metallen unter 7 %, bevorzugt unter 3 %, besonders bevorzugt unter 1 % liegt. Metalle wie z. B. Al, Mg, Sb, As, die ein nachgeschaltetes Aufbereitungsverfahren stören können, können zumindest teilweise über das Rauchgas (II) abgeführt werden.

In einer bevorzugten Ausführungsform beträgt die Aufenthaltszeit des Rauchgases in der heißen Zone der Nachbrennkammer zwischen 2 und 7 Sekunden. Die ausgebrannten Rauchgase scheiden beim Durchströmen des nachgeschalteten Dampfkessels (8) Stäube ab. Diese in einer Staubkammer (9) gesammelt.

Die die Prozesskammer flüchtig verlassenden Komponenten bestehen insbesondere aus Rauchgasen der bereits erfolgten Verbrennung, unvollständig oxidierten organischen Verbindungen, Metalldämpfen, -Verbindungen, Stäuben und anderen anorganischen Verbindungen. Diese werden einer der Prozesskammer nachgeordneten Nachbrennkammer zugeführt, in welcher die vollständige Oxidation aller noch enthaltenen restlichen organischen Verbindungen erfolgt. Hierzu ist auch die Verweilzeit des Rauchgases (II) in der Nachbrennkammer mit bevorzugt > 2 s ausreichend groß. Die Temperatur innerhalb der Nachbrennkammer ist ausreichend hoch und liegt insbesondere über 850°C, bevorzugt über 1000°C, in einer weiteren Ausführungsform insbesondere über 800°C, bevorzugt über 900°C. Bei solchen Temperaturen werden Dioxine und Furane vollständig zerstört. Das mit anorganischen Schadstoffen beladene Rauchgas (II) wird anschließend zur Einhaltung niedriger Emissionswerte mehrstufig gereinigt. Zuvor kann dem Rauchgas (II) durch Abkühlen Wärmeenergie entzogen werden, die in geeigneter Form anderweitig genutzt werden kann. Bevorzugt wird die anschließende Rauchgasreinigung wie folgt durchgeführt: Das Rauchgas (II) wird im ersten Schritt in einer sogenannten Quenche (10) auf eine Temperatur unter 100°C, bevorzugt auf ca. 70 bis 80°C, vorzugsweise durch Einspritzen von Wasser, abgekühlt. Der Quenche schließen sich Wäscher an, um weitere Bestandteile aus dem Rauchgas (II) zu entfernen. Hierbei handelt es sich um Rotationswäscher, die sauer und/oder alkalisch betrieben werden. Anschließend erfolgt eine Entfernung des Feinstaubes in einem Kondensationselektrofilter (14). Im letzten Schritt wird die Konzentration an ggf. im Rauchgas vorhandenen Dioxinen und Furanen sowie Stickoxiden an einem Katalysator deutlich reduziert. Die im Abwasser der Rauchgasreinigung enthaltenen restlichen Wertmetallanteile können über eine nachgeschaltete Abwasserbehandlungsanlage einer Verwertung zugeführt, werden.

Die gereinigte Abluft wird vorzugsweise über einen Kamin (16) abgegeben.

Als Katalysatoren können alle dem Fachmann für die katalytische Nachreinigung bekannten Substanzen benutzt werden.

Bevorzugt wird der Prozess so gerührt, dass es im Rahmen der thermischen Behandlung zu einem Aufschmelzen einzelner niedrigschmelzender Metallanteile kommt, die wiederum höherschmelzende Metalle lösen. Diese Metalllösung nimmt insbesondere auch Edelmetallbestandteile mit auf. Diese Metallanteile finden sich in Form von Metallkonglomeraten in dem ausgetragenen Rückstand wieder. Die Metallkonglomerate können abgetrennt werden. Die Bildung dieser Metallkonglomerate kann durch eine entsprechende Konzentration von Eisen und/oder Loten (z.B. Zinn, Blei, Wismut) gesteigert werden. Hierzu können Eisen, Lote und/oder Flussmittel auch zugegeben werden.

Der Vorteil der Erfindung liegt darin, dass die Metallkonglomerate einfach von den festen anorganischen Bestandteile abgetrennt werden können und in einem nachgeschalteten Aufbereitungsverfahren (z. B. Verhüttung) direkt in einen sehr späten Teilschritt des Verhüttungsprozesses eingetragen werden können. Hierdurch kann die Effizienz der Metallrückgewinnung im nachgeschalteten Aufbereitungsverfahren gesteigert werden.

Ein weiterer Gegenstand der Erfindung ist eine Anlage zur thermischen Behandlung metallhaltiger Abfälle und Materialien, beinhaltend einen Drehrohrofen (1), eine kontinuierlich arbeitende Beschickungsvorrichtung (6), eine Kühlmittelzugabelanze (4) die von der Beschickungsseite (1') her in den Drehofen (1) hineinragt, mindestens eine Nachbrennkammer, mindestens einen Abhitzekessel, mindestens eine Quenche, ein Rotationswäscher oder mindestens zwei hintereinandergeschaltete Rotationswäscher, mindestens ein Kondensationselektrofilterund mindestens eine katalytische Nachreinigung für die Rauchgase.

Der Drehrohrofen (1) besteht aus einem länglichen Rohr, das für industrielle Anwendungen vorzugsweise 10 bis 13 m lang ist, wobei auch andere gängige Längen verwirklicht werden können. Dieses Rohr ist vorzugsweise gegenüber der Horizontalen geneigt und mit einem feuerfesten Material ausgemauert.

Zur Abkühlung ist eine Kühlmittelzugabelanze (4) eingebaut, die von der Beschickungsseite (1') her in den Drehrohrofen (1) hineinragt und aus deren Düse (4') Wasser ein Kühlmittel in den Ofen gebracht wird.

In einer weiteren Ausführungsform wird die Temperatur innerhalb des Drehrohrofens (1) mit einem Thermoelement und einer Infrarotkamera (5) überwacht.

Bevorzugt werden innerhalb der Verbrennungszone (B) dem Schrott die organischen Bestandteile entzogen und die Verbrennungsprodukte zusammen mit gegebenenfalls entstehenden Metalldämpfen, Metallverbindungen und Stäuben als Rauchgas (II) der Nachbrennkammer (7) zugeleitet.

Ebenfalls bevorzugt ist eine kontrollierte Sauerstoffzufuhr zur Aufrechterhaltung der Verbrennung.

### Ausführungsbeispiel:

Ein Ausführungsbeispiel der Erfindung wird nachfolgend anhand beigefügter Figuren erläutert, ohne dabei auf diese beschränkt zu sein.

Dabei werden folgende Bezugzeichen verwendet:
- 1: Drehrohrofen
- 1': Beschickungsseite
- 1": Austrittseite
- 2: Wasserbad
- 3: Stützfeuerung
- 4: Kühlmittelzugabelanze
- 4': Düse
- 5: Thermoelement mit Infrarotkamera
- 6: Beschickvorrichtung
- 7: Nachbrennkammer
- 8: Dampfkessel
- 9: Staubkammer
- 10: Quenche
- 11: Auslass der wasserlöslichen Stoffe und Stäube
- 12: Sauerer Rotationswäscher
- 13: Alkalischer Rotationswäscher
- 14: Kondensationselektrofilter
- 15: Katalytische Nachreinigungskammer
- 16: Kamin
- 17: Metallhaltiger Abfall
- 18: Flamme
- 19: Konglomerate
- I: Fester Rückstand
- II: Rauchgas
- A: Aufheizphase
- B: Verbrennungszone
- C: Bildung der Metallkonglomerate

Es zeigen:
- Fig. 1: den schematischen Aufbau einer Vorrichtung zur Durchführung des Verfahrens;
- Fig. 2a: die vergrößerte Darstellung der von einem Drehrohr gebildeten Prozesskammer und
- Fig. 2b: schematisch den Temperaturverlauf durch das Drehrohr gemäß Fig. 2a.
- Fig. 3: ein Foto von einem ausgetragenen (Metall-)Konglomerat.

Die Vorrichtung zur Durchführung des Verfahrens besteht im Wesentlichen aus einem Drehrohrofen (1), das aus einem länglichen Rohr von ca. 10 bis 13 m besteht. Dieses Rohr ist gegenüber der Horizontalen geneigt und mit einem feuerfesten Material ausgemauert. Die Neigung und das Drehen des Rohres mit 10 bis 20 Umdrehungen pro Stunde [Uph] um seine Längsachse bewirken, dass der sich auf der Beschickungsseite 1' über eine Beschickungsvorrichtung (6) in das Drehrohr kontinuierlich eingetragene metallhaltige Abfall durch das Rohr hin zu der der Beschickungsseite (1') gegenüberliegenden Austrittsseite (1") bewegt. Dabei wird der zu behandelnde metallhaltige Abfall (17) im Drehrohr (1) ständig in Bewegung gehalten und intensiv durchmischt.

Auf der Beschickungsseite (1') wird das Drehrohr mit dem zu behandelnden Elektronikschrott beschickt. Dieser durchläuft das Drehrohr in einer Zeit von ca. 1,5 Stunden. Größere Teile des Elektronikschrotts, wie z. B. Chassis, welche aus Metall, insbesondere Eisen und aus Kunststoffen bestehen, können zerkleinert und insbesondere geschreddert sein.

Dieser Schrott durchwandert aufgrund der Drehung des Drehrohres zunächst die mit A bezeichnete Aufheizphase innerhalb des Drehrohrofens (1). Mit Hilfe einer Stützfeuerung (3), die sich auf der Beschickungsseite (1') des Drehrohrofens (1) befindet, wird die zur Aufwärmung des Schrottes erforderliche Wärme in den Drehrohrofen eingeleitet, dies erfolgt beispielsweise mit der langgestreckten und mit der Bezugsziffer (18) bezeichneten Flamme. Je nach Heizwert des Schrottes kann eine Abkühlung erforderlich sein, um die Verbrennungstemperatur im besonders bevorzugten Bereich zwischen 700 bis 850°C zu halten. Dieser Temperaturbereich soll in der mit B bezeichneten Verbrennungszone gehalten werden. Zur gegebenenfalls erforderlichen Abkühlung ist eine Kühlmittelzugabelanze (4) vorgesehen, die im Ausführungsbeispiel von der Beschickungsseite (1') her in das Drehrohrofen (1) hineinragt und aus deren Düse (4') Wasser oder ein ähnlich geeignetes Kühlmittel in den Ofen gebracht wird.

Der sich auf dem Boden des Drehrohres von der Beschickungsseite (1') bis zur Austrittsseite (1") bewegende zu behandelnde metallhaltige Abfall (17) wird somit in dem gewünschten Temperaturbereich gehalten, in welchem die Oxidation der organischen Bestandteile im metallhaltigen Abfall möglichst vollständig erzielt wird. Gleichzeitig soll die Temperatur aber nicht zu hoch werden, um zu vermeiden, dass nennenswerte Mengen der rückzugewinnenden metallischen Komponenten über das Rauchgas (II) abtransportiert werden. Metalle wie z. B. Al, Mg, Sb, As, die ein nachgeschaltetes Aufbereitungsverfahren stören können, werden zumindest teilweise über das Rauchgas (II) abgeführt.

Die Temperatur innerhalb des Drehrohrofens (1) wird im Ausführungsbeispiel mittels Thermoelement und einer Infrarotkamera (5) überwacht. Die Kamera befindet sich in einer Entfernung außerhalb des Drehrohrofens rückwärtig der Austrittsseite an einer Wandung einer nachgeordneten Nachbrennkammer (7).

Innerhalb der Verbrennungszone (B) werden dem Schrott die organischen Bestandteile entzogen. Dies erfolgt dadurch, dass die organischen Bestandteile bei den dort herrschenden Temperaturen abdampfen bzw. aufgespalten werden, sich in gasförmige Zwischenprodukte umwandeln und verbrannt werden. Diese Verbrennungsprodukte werden zusammen mit gegebenenfalls entstehenden Metalldämpfen, -verbindungen und Stäuben als Rauchgas (II) der Nachbrennkammer (7) zugeleitet.

Bevorzugt kann eine kontrollierte Sauerstoffzufuhr in Form von Luft vorgesehen sein, mit der die Verbrennung aufrecht erhalten wird. Dies wird in dem Umfang zugelassen, dass sich die Temperatur des im Drehrohr befindlichen metallhaltigen Abfalls (17) im Bereich zwischen 750°C bis 850°C bewegt.

Das der Nachbrennkammer (7) zugeführte Rauchgas (II) wird zunächst thermisch bei Temperaturen über 1000°C behandelt, so dass die darin befindlichen organischen Komponenten komplett oxidiert werden. Die Aufenthaltszeit des Rauchgases in der heißen Zone der Nachbrennkammer ist ausreichend groß und beträgt zwischen 2 und 7 Sekunden. Die ausgebrannten Rauchgase scheiden beim Durchströmen des nachgeschalteten Dampfkessels (8) Stäube ab. Im Anwendungsbeispiel werden diese in einer Staubkammer (9) gesammelt.

Zur Nutzung der Wärmeenergie wird das so behandelte Rauchgas (II) einem Dampfkessel (8) zugeleitet, in welchem es auf Temperaturen von 300°C bis 350°C heruntergekühlt wird. Der Dampfkessel (8) wird mit Wasser unter entsprechendem Überdruck betrieben.

Die abgekühlten Rauchgase werden anschließend einer nassen Rauchgasreinigung zugeführt, dort wird es, zunächst durch Einspritzen von Wasser auf 70 bis 80°C in einer Quenche (10) abgekühlt.

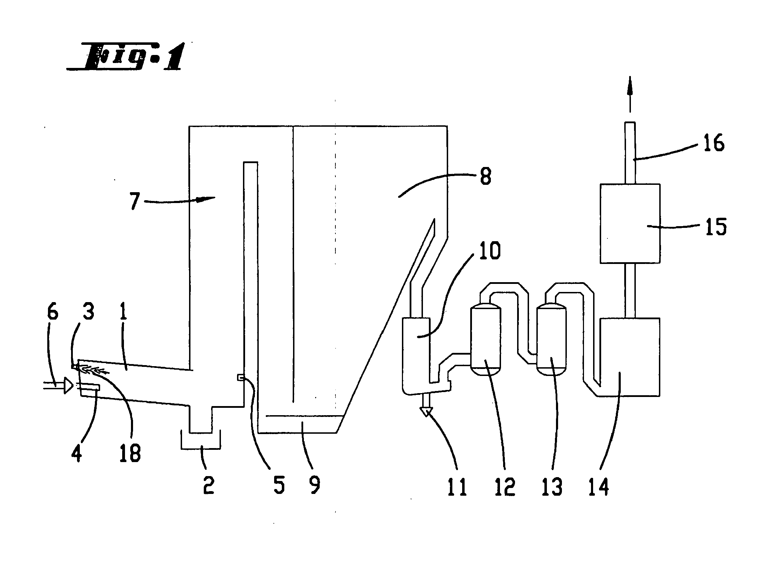

Dabei werden wasserlösliche Stoffe und Stäube ausgewaschen und an in der Figur 1 mit Bezugzeichen (11) dargestellten Stelle abgeführt.

Daran anschließend wird das Rauchgas (II) zunächst einem sauer betriebenen Rotationswäscher (12) zugeführt, in welchem eine saure Waschflüssigkeit auf Schleuderräder aufgegeben wird, die einen feinen Flüssigkeitsnebel erzeugen. Beim Durchströmen dieses Nebels kommt das Rauchgas (II) in engen Kontakt mit der Waschflüssigkeit, so dass hier weitere saure Rauchgasbestandteile und auch Feinstäube ausgewaschen und abgeschieden werden.

In ähnlicher Weise wirkt der dem sauer betriebenen Rotationswäscher (12) nachgeschaltete alkalisch betriebene Rotationswäscher (13). In dieser Stufe wird eine alkalische Waschflüssigkeit, im Ausführungsbeispiel mit Natronlauge versetzt, zugegeben, um restliche saure Rauchgasinhaltsstoffe zu entfernen.

Die wenigen noch im Rauchgas (II) befindlichen festen oder flüssigen Schwebstoffe werden in einem elektrostatisch betriebenen Kondensationsfilter (14) abgeschieden. Das so behandelte Rauchgas (II) wird im Folgenden einer katalytischen Nachreinigung (15) zugeführt und anschließend als gereinigte Abluft über den Kamin (16) abgegeben.

### Verfahrensrelevante Parameter des Anwendungsbeispiels

| | | |
|---|---|---|
| 1. | 50 kg/h | Stützbrennstoff im Drehrohr |
| 2. | 135 t | Metallhaltiger Abfall (trocken) |
| 3. | 700°C - 850°C | Rauchgastemperatur am Austritt des Drehrohres |
| 4. | 10-20 Uph | Drehgeschwindigkeit |
| 5. | 79 t | ausgebrannter metallhaltiger Rückstand (trocken) (Verluste an rück zu gewinnenden Metallen ca. 1% gegenüber 10 % im Stand der Technik) |
| 6. | 640 kg | Staub |
| 7. | 1050 °C | Rauchgastemperatur am Austritt der Nachbrennkammer |
| 8. | 30.000 Nm³/h | Rauchgasmenge |

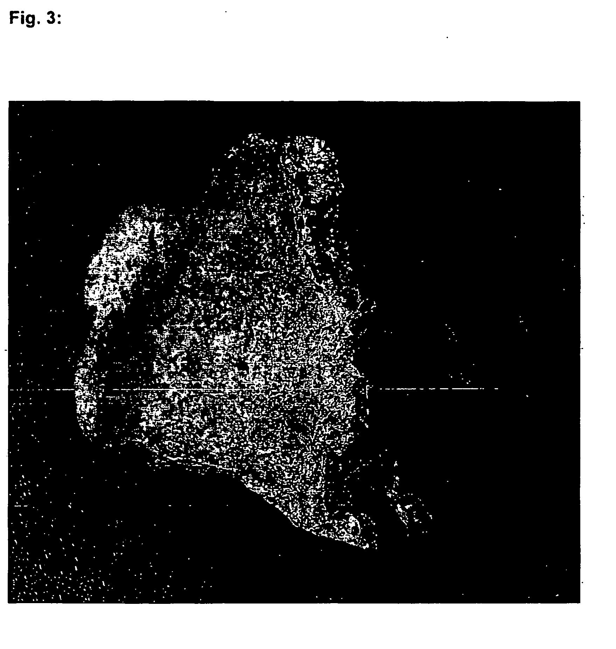

Die ausgetragenen Metallkonglomerate sind in Fig. 3 zu erkennen.

## Patentansprüche

1. Verfahren zur Rückgewinnung von Metallen aus metallhaltigen Abfällen und/oder Materialien, **dadurch gekennzeichnet, dass** der metallhaltige Abfall und/oder das Material in einen Drehrohrofen (1) eingeführt wird, unter kontinuierlicher intensiver Durchmischung thermisch und unter Zuleitung von sauerstoffhaltigen Gasen oxidativ behandelt wird, die flüchtig restlichen organischen Komponenten kontinuierlich entzogen und anschließend weiter oxidiert werden und die metallhaltigen Komponenten, aus dem Drehrohrofen (1) ausgetragen werden, **dadurch gekennzeichnet, dass** die Verbrennungstemperatur in dem Drehrohrofen (1) mittels Temperaturerfassungsmittel, Temperaturregelungsmitteln und Temperatursteuerungsmitteln durch Zugabe von Kühlmittel durch eine Kühlmittelzugabelanze (4), die von der Beschickungsseite (1') in den Drehrohrofen (1) hineinragt, in einem Bereich von 400 bis 1100°C gehalten wird.

2. Verfahren nach Anspruch 1, **dadurch gekennzeichnet, dass** der metallhaltige Abfall und/oder das Material kontinuierlich in den Drehrohrofen (1) eingeführt wird und die metallhaltigen Komponenten und die anorganischen nichtmetallhaltigen Komponenten kontinuierlich aus dem Drehrohrofen (1) ausgetragen werden.

3. Verfahren nach Anspruch 1 oder 2, **dadurch gekennzeichnet, dass** die metallhaltigen Komponenten bevorzugt als Metallkonglomerate aus dem Drehrohrofen (1) ausgetragen werden.

4. Verfahren nach einem der Ansprüche 1 bis 3, **dadurch gekennzeichnet, dass** die Verbrennungstemperatur (T) in dem Drehrohrofen (1) in einem Bereich von 500 bis 900°C gehalten wird.

5. Verfahren nach einem oder mehreren der Ansprüche 1 bis 4, **dadurch gekennzeichnet, dass** der Drehrohrofen (1) gegenüber der Horizontalen geneigt ist.

6. Verfahren nach einem oder mehreren der Ansprüche 1 bis 5, **dadurch gekennzeichnet, dass** der metallhaltige Abfall und/oder das Material von der Beschickungsseite (1') zur Austrittsseite (1") des Drehrohrofens (1) transportiert wird, wobei der Abfall zunächst in einer Aufheizzone (A) gegebenenfalls mit Hilfe eines Stützfeuers (3) aufgeheizt wird, dann in einer sich daran anschließenden Verbrennungszone (B) die organischen Komponenten von den metallischen Komponenten thermisch getrennt und zumindest teilweise, bevorzugt größtenteils verbrannt werden und schließlich die nicht flüchtigen Metallbestandteile zusammen mit gegebenenfalls vorhandenen nicht flüchtigen anorganischen Bestandteilen auf der der Beschickungsseite des Drehrohrofens (1) gegenüberliegenden Austrittsseite im Wesentlichen kontinuierlich austreten.

7. Verfahren nach einem oder mehreren der Ansprüche 1 bis 6, **dadurch gekennzeichnet, dass** die den Drehrohrofen (1) flüchtig verlassenden Komponenten einer dem Drehrohrofen (1) nachgeordneten Nachbrennkammer (7) zugeführt werden, in welcher die vollständige Oxidation aller noch enthaltenen restlichen organischen Verbindungen erfolgt und die Verweilzeit des Rauchgases (II) > 2 s beträgt und die Temperatur innerhalb der Nachbrennkammer (7) über 850 °C liegt.

8. Verfahren nach einem oder mehreren der Ansprüche 1 bis 7, **dadurch gekennzeichnet, dass** das mit anorganischen Schadstoffen beladene Rauchgas (II) zur Einhaltung niedriger Emissionswerte mehrstufig gereinigt wird.

9. Verfahren nach einem oder mehreren der Ansprüche 1 bis 8, **dadurch gekennzeichnet, dass** der metallhaltige Abfall bevorzugt Elektronikschrott ist, der zerkleinert oder unzerkleinert ist bzw. diese dem Abfall gezielt zugegeben werden.

10. Verfahren nach einem oder mehreren der Ansprüche 1 bis 9, **dadurch gekennzeichnet, dass** die Verbrennungstemperatur (T) in dem Drehrohrofen (1) mittels Temperaturerfassungsmittel , -Regelungsmitteln und -Steuerungsmitteln in einem Bereich gehalten wird, in dem einerseits der Ausbrand des zu behandelnden Abfalls möglichst vollständig und andererseits der Verlust an rückzugewinnenden Metallen über das Rauchgas (II) möglichst gering ist.

11. Verfahren nach einem oder mehreren der Ansprüche 1 bis 10, **dadurch gekennzeichnet, dass** das Temperaturerfassungsmittel eine Infrarotkamera (5) zur Ermittlung der lokalen Temperatur im zu behandelnden Abfall (17) innerhalb des Drehrohrofens (1) umfasst.

12. Verfahren nach Anspruch 11, **dadurch gekennzeichnet, dass** die Infrarotkamera (5) der Austrittsseite (1") des Drehrohrofens (1) zugeordnet ist.

13. Verfahren nach einem der Ansprüche 1 bis 12, **dadurch gekennzeichnet, dass** das der Nachbrennkammer (7) zugeführte Rauchgas (II) zunächst thermisch bei Temperaturen über 850°C behandelt wird, im nachgeschalteten Dampfkessels (8) Stäube abgeschieden und in einer Staubkammer (9) gesammelt , anschließend durch Einspritzen von Wasser auf 70 bis 80°C in einer Quenche (10) abgekühlt, einem sauer betriebenen Rotationswäscher (12), in welchem eine saure Waschflüssigkeit auf Schleuderräder aufgegeben wird, zugeführt, einem alkalisch betriebene Rotationswäscher (13) zugeführt, die noch vorhandenen festen oder flüssigen Schwebstoffe in einem elektrostatisch betriebenen Kondensationsfilter (14) abgeschieden werden und Rauchgas (II) einer katalytischen Nachreinigung (15) zugeführt, und anschließend als gereinigte Abluft über den Kamin (16) abgegeben wird.

14. Anlage zur thermischen Behandlung metallhaltiger Abfälle und/oder Materialien nach einem Verfahren nach einem oder mehreren der Ansprüche 1 bis 13 **dadurch gekennzeichnet, dass** diese Anlage einen Drehrohrofen (1), eine kontinuierlich arbeitende Beschickungsvorrichtung (6), eine Kühlmittelzugabelanze (4), die von der Beschickungsseite (1') in den Drehrohrofen (1) hineinragt, mindestens eine Nachbrennkammer (7), mindestens einen Dampfkessel (8), mindestens eine Quenche (10), ein Rotationswäscher oder mindestens zwei hintereinandergeschaltete Rotationswäscher (12,13), mindestens ein Kondensationselektrofilter (11) und mindestens eine katalytische Nachreinigung (15) für die Rauchgase beinhaltet.

15. Anlage nach Anspruch 14, **dadurch gekennzeichnet, dass** der Drehrohrofen (1) gegenüber der Horizontalen geneigt ist.

## Claims

1. Process for recovering metals from metal-containing wastes and/or materials, **characterized in that** the metal-containing waste and/or the material is introduced into a rotary tube furnace (1), treated thermally with continuous intensive mixing and oxidatively with addition of oxygen-containing gases, the organic components remaining in gaseous form are continuously removed and subsequently oxidized further and the metal-containing components are discharged from the rotary tube furnace (1), **characterized in that** the combustion temperature in the rotary tube furnace (1) is kept in a range from 400 to 1100°C by means of temperature measurement means, temperature regulating means and temperature control means by addition of coolant through a coolant addition lance (4) which projects from the feed end (1') into the rotary tube furnace (1).

2. Process according to Claim 1, **characterized in that** the metal-containing waste and/or the material is continuously introduced into the rotary tube furnace (1) and the metal-containing components and the inorganic components which do not contain metal are continuously discharged from the rotary tube furnace (1).

3. Process according to Claim 1 or 2, **characterized in that** the metal-containing components are preferably discharged as metal conglomerates from the rotary tube furnace (1).

4. Process according to any of Claims 1 to 3, **characterized in that** the combustion temperature (T) in the rotary tube furnace (1) is kept in the range from 500 to 900°C.

5. Process according to one or more of Claims 1 to 4, **characterized in that** the rotary tube furnace (1) is inclined to the horizontal.

6. Process according to one or more of Claims 1 to 5, **characterized in that** the metal-containing waste and/or the material is transported from the feed end (1') to the outlet end (1") of the rotary tube furnace (1), with the waste firstly being heated in a heating zone (A), if appropriate with the aid of an auxiliary firing (3), the organic components then being thermally separated from the metallic components and at least partly, preferably mostly, burnt in a subsequent combustion zone (B) and the nonvolatile metal constituents together with any nonvolatile inorganic constituents present finally being discharged essentially continuously at the outlet end located opposite the feed end of the rotary tube furnace (1).

7. Process according to one or more of Claims 1 to 6, **characterized in that** the components leaving the rotary tube furnace (1) in gaseous form are fed into an after-combustion chamber (7) which is located downstream of the rotary tube furnace (1) and in which complete oxidation of all residual organic compounds still present occurs and the residence time of the flue gas (II) is > 2 s and the temperature within the after-combustion chamber (7) is above 850°C.

8. Process according to one or more of Claims 1 to 7, **characterized in that** the flue gas (II) laden with inorganic pollutants is purified in a number of stages to achieve low emission values.

9. Process according to one or more of Claims 1 to 8, **characterized in that** the metal-containing waste is preferably electronics scrap which is comminuted or uncomminuted or these are deliberately added to the waste.

10. Process according to one or more of Claims 1 to 9, **characterized in that** the combustion temperature (T) in the rotary tube furnace (1) is kept in a range in which, firstly, the burn-out of the waste to be treated is essentially complete and, secondly, the loss of metals to be recovered via the flue gas (II) is very low by means of temperature measurement means, temperature regulating means and temperature control means.

11. Process according to one or more of Claims 1 to 10, **characterized in that** the temperature measurement means comprises an infrared camera (5) to determine the local temperature in the waste (17) to be treated within the rotary tube furnace (1).

12. Process according to Claim 11, **characterized in that** the infrared camera (5) is located at the outlet end (1'') of the rotary tube furnace (1).

13. Process according to any of Claims 1 to 12, **characterized in that** the flue gas (II) fed to the after-combustion chamber (7) is firstly treated thermally at temperatures above 850°C, dusts are precipitated in the downstream steam boiler (8) and collected in a dust chamber (9), the flue gas (II) is subsequently cooled to from 70 to 80°C by spraying in water in a quench (10), fed to a rotary scrubber (12) operated under acidic conditions in which an acidic scrubbing liquid is fed in onto rotary disks, fed to a rotary scrubber (13) operated under alkaline conditions, the solid or liquid suspended materials still present are precipitated in an electrostatically operated condensation filter (14) and the flue gas (II) is passed to a catalytic after-purification (15) and subsequently released as purified exhaust air via the chimney (16).

14. Plant for the thermal treatment of metal-containing wastes and/or materials by a process according to one or more of Claims 1 to 13, **characterized in that** this plant comprises a rotary tube furnace (1), a continuously operating feed device (6), a coolant addition lance (4) which projects from the feed end (1') into the rotary tube furnace (1), at least one after-combustion chamber (7), at least one steam boiler (8), at least one quench (10), a rotary scrubber or at least two rotary scrubbers (12, 13) connected in series, at least one condensation electrofilter (11) and at least one catalytic after-purification (15) for the flue gases.

15. Plant according to Claim 14, **characterized in that** the rotary tube furnace (1) is inclined in the horizontal.

## Revendications

1. Procédé pour récupérer des métaux de déchets et/ou de matériaux contenant des métaux, **caractérisé en ce que** le déchet contenant des métaux et/ou le matériau est introduit dans un four tubulaire rotatif (1), traité thermiquement sous mélange continu intensif et par oxydation avec introduction de gaz contenant de l'oxygène, les composants organiques qui restent sous forme volatile sont soutirés en continu et ensuite oxydés davantage et les composants contenant des métaux sont évacués du four tubulaire rotatif (1), **caractérisé en ce que** la température de combustion dans le four tubulaire rotatif (1) est maintenue dans une plage de 400 à 1100°C à l'aide de moyens de détection de la température, de moyens de régulation de la température et de moyens de commande de la température par addition d'agent de refroidissement par une lance d'addition d'agent de refroidissement (4) qui pénètre à partir du côté alimentation (1') dans le four tubulaire rotatif (1).

2. Procédé selon la revendication 1, **caractérisé en ce que** le déchet contenant des métaux et/ou le matériau est introduit en continu dans le four tubulaire rotatif (1) et les composants contenant des métaux et les composants inorganiques ne contenant pas de métaux sont évacués en continu du four tubulaire rotatif (1).

3. Procédé selon la revendication 1 ou 2, **caractérisé en ce que** les composants contenant des métaux sont évacués de préférence sous forme de conglomérats métalliques du four tubulaire rotatif (1).

4. Procédé selon l'une quelconque des revendications 1 à 3, **caractérisé en ce que** la température de combustion (T) dans le four tubulaire rotatif (1) est maintenue dans une plage de 500 à 900°C.

5. Procédé selon l'une ou plusieurs des revendications 1 à 4, **caractérisé en ce que** le four tubulaire rotatif (1) est incliné par rapport à l'horizontale.

6. Procédé selon l'une ou plusieurs des revendications 1 à 5, **caractérisé en ce que** le déchet contenant des métaux et/ou le matériau est transporté depuis le côté alimentation (1') jusqu'au côté sortie (1") du four tubulaire rotatif (1), le déchet étant d'abord chauffé dans une zone de chauffage (A) le cas échéant à l'aide d'un feu auxiliaire (3), puis les composants organiques sont séparés thermiquement et brûlés au moins en partie, de préférence en majeure partie, dans une zone de combustion (B) consécutive à celle-ci et enfin, les constituants métalliques non volatils sortent de manière sensiblement continue ensemble avec les constituants inorganiques non volatils le cas échéant présents côté sortie opposé au côté alimentation du four tubulaire rotatif (1).

7. Procédé selon l'une ou plusieurs des revendications 1 à 6, **caractérisé en ce que** les composants qui quittent le four tubulaire rotatif (1) sous forme volatile sont alimentés dans une chambre de postcombustion (7) disposée en aval du four tubulaire rotatif (1), dans laquelle a lieu l'oxydation complète de tous les composés organiques résiduels encore contenus et la durée de séjour du gaz de fumée (II) est > 2 s et la température dans la chambre de postcombustion (7) est supérieure à 850°C.

8. Procédé selon l'une ou plusieurs des revendications 1 à 7, **caractérisé en ce que** le gaz de fumée (II) chargé de substances nuisibles inorganiques est purifié en plusieurs étapes pour respecter des valeurs d'émission basses.

9. Procédé selon l'une ou plusieurs des revendications 1 à 8, **caractérisé en ce que** le déchet contenant des métaux réside de préférence en de la ferraille électronique, qui est broyée ou non ou qui est ajoutée de manière ciblée au déchet contenant des métaux.

10. Procédé selon l'une ou plusieurs des revendications 1 à 9, **caractérisé en ce que** la température de combustion (T) dans le four tubulaire rotatif (1) est maintenue, à l'aide de moyens de détection, de régulation et de commande de la température, dans une plage dans laquelle d'une part la combustion complète du déchet à traiter est la plus complète possible et d'autre part la perte en métaux à récupérer via le gaz de fumée (II) est la plus faible possible.

11. Procédé selon l'une ou plusieurs des revendications 1 à 10, **caractérisé en ce que** le moyen de détection de la température est une caméra infrarouge (5) pour déterminer la température locale dans le déchet à traiter (17) dans le four tubulaire rotatif (1).

12. Procédé selon la revendication 11, **caractérisé en ce que** la caméra infrarouge (5) est associée au côté sortie (1") du four tubulaire rotatif (1).

13. Procédé selon l'une quelconque des revendications 1 à 12, **caractérisé en ce que** le gaz de fumée (II) alimenté dans la chambre de postcombustion (7) est d'abord traité thermiquement à des températures supérieures à 850°C, des poussières sont séparées dans une chaudière à vapeur (8) disposée en aval et récupérées dans une chambre à poussières (9), ensuite ledit gaz est refroidi dans un dispositif de refroidissement rapide (10) par injection d'eau à 70 jusqu'à 80°C, alimenté dans un laveur rotatif (12) exploité dans la plage acide, dans lequel un liquide de lavage acide est envoyé sur une roue à pales, alimenté dans un laveur rotatif (13) exploité dans la plage basique, les matières en suspension solides ou liquides encore présentes sont séparées dans un filtre à condensation (14) exploité électrostatiquement et le gaz de fumée (II) est alimenté dans un post-nettoyage catalytique (15) et ensuite évacué sous forme d'air résiduaire purifié via la cheminée (16).

14. Installation pour le traitement thermique de déchets et/ou de matériaux contenant des métaux selon un procédé selon l'une ou plusieurs des revendications 1 à 13, **caractérisée en ce que** cette installation comporte un four tubulaire rotatif (1), un dispositif d'alimentation (6) fonctionnant en continu, une lance d'addition d'agent de refroidissement (4), qui pénètre à partir du côté alimentation (1') dans le four tubulaire rotatif (1), au moins une chambre de postcombustion (7), au moins une chaudière à vapeur (8), au moins un dispositif de refroidissement rapide (10), un laveur rotatif ou au moins deux laveurs rotatifs (12,13) disposés l'un derrière l'autre, au moins un électrofiltre à condensation (11) et au moins un post-nettoyage catalytique (15) pour les gaz de fumée.

15. Installation selon la revendication 14, **caractérisée en ce que** le four tubulaire rotatif (1) est incliné par rapport à l'horizontale.
